# EUROPEAN PATENT APPLICATION

(11) **EP 2 407 337 A1**
(43) Date of publication of application: **18.01.2012**
(21) Application number: 09841427.9
(22) Date of filing: 14.12.2009
(51) Int. Cl.: B60K 35/00, G02B 27/01

(54) **HEAD-UP DISPLAY DEVICE**

(30) Priority: 12.03.2009 JP 2009059530
(71) Applicant: Honda Motor Co., Ltd., Minato-ku Tokyo 107-8556 (JP)
(72) Inventor: KASAI, Kazunaga, Wako-shi Saitama 351-0193 (JP); ISHIDA, Yoshimitsu, Wako-shi Saitama 351-0193 (JP); KASAI, Mika, Wako-shi Saitama 351-0193 (JP)
(74) Representative: Feller, Frank
(86) International application number: PCT/JP2009/006844
(87) International publication number: WO 2010/103596

(57) **Abstract**

A head-up display device according to the invention includes a projector that projects an image to be displayed on a windshield of a vehicle; a housing that accommodates the projector and has an opening portion on a pathway of a projection light that is projected from the projector; a transmissive member that blocks the opening portion and transmits the projection light; and a light blocking portion that blocks a light path along which light incident from an outside of the vehicle is reflected on the transmissive member and the windshield and reaches a predetermined viewpoint region on a driver's seat side, wherein the light blocking portion is formed by a printed layer provided in the periphery of the windshield.

## Description

### Technical Field

The present invention relates to a head-up display device that displays an image on a windshield of a vehicle.
Priority is claimed on Japanese Patent Application No. 2009-059530, filed on March 12, 2009, the contents of which are incorporated herein by reference.

### Background Art

In a head-up display device that displays an image on a windshield of a vehicle in the conventional art, a projection device is accommodated in an upper portion of an instrument panel and is displaced in a vehicle. This projection device projects light on a display plane on the windshield and thereby the image is displayed.
In addition, as the head-up display device, a head-up display device is known in which a cover glass is further provided to prevent dust or a foreign matter from entering an upper opening portion in an upper side of the projection device. In this head-up display device, when light, which is incident from the outside of the vehicle and is reflected on the cover glass, is further reflected on the display plane and reaches the eyes of a passenger in the vehicle, a glare is produced on the display plane..
As a countermeasure of this problem, in Patent Document 1 described below, a head-up display device is suggested which is provided with a light blocking wall that protrudes toward an upper side of the cover glass from an edge of a windshield (vehicle front side).

### Patent Document

[Patent Document 1] Japanese Utility Model Application, First Publication No. 4-57881

### Disclosure of the Invention

### Problem that the Invention is to solve

However, in the above-described head-up display device, there is a problem in that a light blocking wall is provided, such that the number of manufacturing processes increases and thereby the cost increases.
In addition, when the light blocking wall is not provided, the cover glass is largely inclined in a manner such that the vehicle rear side thereof becomes high, and thereby the light reflected on the cover glass is suppressed from reaching an eyellipse (for example, a predetermined viewpoint region on the driver's seat side; JIS D0021). However, in this case, a dimension in a vertical direction becomes large, such that there is a problem in that a layout property inside the instrument panel is deteriorated.

The present invention has been made in consideration of such circumstances, and an object of the present invention is to provide a head-up display device capable of preventing a glare on a display plane caused by external light, reducing the cost, and improving a layout property inside the instrument panel.

### Means for solving the Problem

The present invention adopts the followings to solve the problem and to accomplish the object.
(1) According to an embodiment of the present invention, a head-up display device is provided including a projector that projects an image to be displayed on a windshield of a vehicle; a housing that accommodates the projector and has an opening portion on a pathway of a projection light that is projected from the projector; a transmissive member that blocks the opening portion and transmits the projection light; and a light blocking portion that blocks a light path along which light incident from an outside of the vehicle is reflected on the transmissive member and the windshield and reaches a predetermined viewpoint region on a driver's seat side, wherein the light blocking portion is formed by a printed layer provided in the periphery of the windshield.

According to the head-up display device described in (1) above, it is not necessary to provide the light blocking portion in the housing, and therefore it is possible to reduce the cost and improve the appearance. In addition, the dimension of the housing in a vertical direction of the vehicle can be made smaller than when the light blocking portion is formed in the housing, and therefore it is possible to improve the layout inside the instrument panel.

(2) In the head-up display device described in (1) above, the printed layer may be formed by a ceramic print that has a color for blocking the incident light.

According to the head-up display device described in (2) above, it is possible to form the light blocking portion without increasing the number of manufacturing processes.

### Effects of the Invention

According to the head-up display device of the present invention, it is possible to prevent the glare on a display plane caused by external light, reduce the cost, and improve the layout inside an instrument panel.

### Brief Description of the Drawings

FIG. 1 is a partial cross-sectional view seen from a lateral direction of a head-up display device according to an embodiment of the present invention.
FIG. 2 is a partial cross-sectional view illustrating a light path of external light that reaches the upper and lower limits of an eyellipse according to the embodiment.

### Description of Embodiments

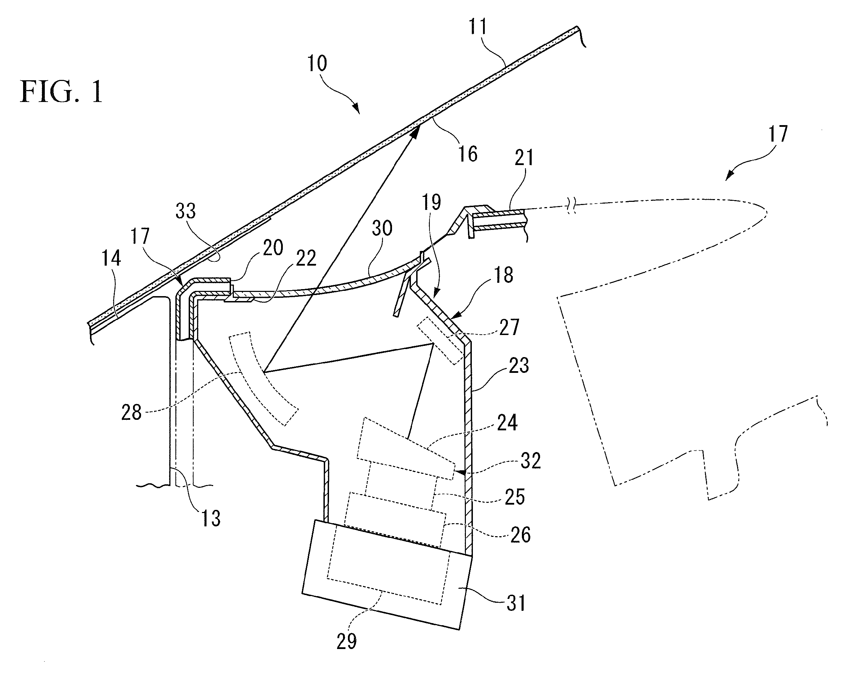

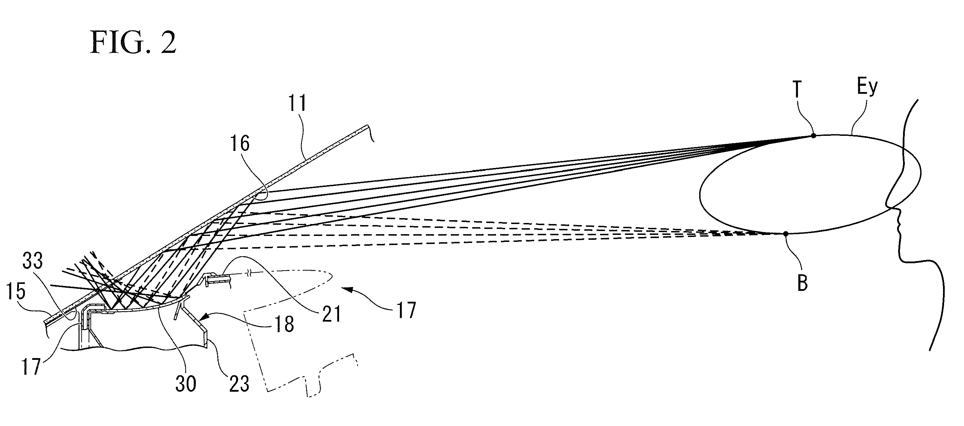

A head-up display device according to an embodiment of the present invention will be described with reference to FIGS. 1 and 2.
The head-up display device 10 of the embodiment reflects light beams on a vehicle interior side surface of a windshield 11 and displays an image including information such as information calling for attention to the passenger.

FIG. 1 shows a longitudinal cross-sectional plane of the head-up display device 10 displaced in front of a driver's seat of the vehicle. As shown in FIG. 1, at the front of the vehicle interior, a dashboard upper 13 is formed to stand up from a front section of a floor panel (not shown) of the vehicle across the vehicle width direction. A cowl top 14 is displaced at an upper edge of the dashboard upper 13 across the vehicle width direction. The windshield 11 is attached to an opening (not shown) formed at the front of the vehicle interior in an inclined state of standing up from the vicinity of the cowl top 14 toward the rear of the vehicle interior. On a predetermined region 16 (hereinafter, referred to as a display portion) of the vehicle interior side surface of the windshield 11, light beams of an image emitted from a projection device 18 described later are reflected and displayed as a display image.

An instrument panel 17 is attached to the dashboard upper 13 at the vehicle interior side across the vehicle width direction. In-vehicle devices such as a car navigation device (not shown), and meters and gauges such as a speedometer are attached to the instrument panel 17. In addition, an accommodating portion 19 that accommodates the projection device 18 making up the head-up display device 10 is formed in the instrument panel 17 in the vicinity of the windshield 11. An opening 20 of the accommodating portion 19 is displaced on an upper plane 21 of the instrument panel 17.

The projection device 18 is a device that projects an image for reflection-displaying a display image on the display portion 16 of the windshield 11. The projection device 18 is provided with a housing 23 having the upper opening portion 22 formed therein. The housing 23 accommodates a projector 32 including a liquid crystal unit 24, a light diffusion unit 25, a backlight unit 26, and a heat sink 29, a plane mirror 27, and a concave mirror 28. A cover member 30 that blocks out the upper opening portion 22 is attached to the housing 23.

The liquid crystal unit 24 includes a liquid crystal panel such as a TFT (Thin Film Transistor) embedded therein, and displays an image on the liquid crystal panel based on a control instruction transmitted from a control unit (not shown).
The light diffusion unit 25 is a unit including a concave lens that diverges light beams of the backlight unit 26 and a diffusion plate. The light beams diverged by the light diffusion unit 25 are supplied to the rear surface of the liquid crystal panel of the liquid crystal unit.
The backlight unit 26 is a unit including a light source (for example, a plurality of LEDs or the like) that emits light from the rear surface side or the like of the liquid crystal panel, and is driven based on a control instruction of the control unit connected to a lower portion of the liquid crystal unit 24. The heat sink 29 that cools down the light source is connected to the backlight unit 26. The heat sink 29 is accommodated in a lower case 31 of the housing 23.

The plane mirror 27 reflects the light beams of the backlight, which transmits through the liquid crystal panel, that is, the image displayed on the liquid crystal panel, toward the concave mirror 28.
The concave mirror 28 receives the image reflected on the plane mirror 27, further reflects it toward the display portion 16 of the windshield 11, and corrects distortion that may occur when reflecting the image onto the windshield 11 that is disposed with an inclination due to a predetermined concave shape. By the correction of the distortion, the image reflected on the display portion 16 has a substantially rectangular shape as seen by a driver. In addition, a magnifying lens may be disposed on the light path of the image to enlarge the image reflected on the display portion 16.

The cover member 30 is a member that blocks out the opening 20 for preventing dust or foreign matter from entering the housing 23 and is formed in a flat plate shape or a shape having a substantially arc-like cross-section that is slightly curved along the longitudinal direction of the vehicle, and is made of a transparent resin or a transparent glass that can sufficiently transmit the light beams of the image. In addition, the cover member 30 is attached in a manner such that the top surface thereof is slightly inclined toward the front side of the vehicle not being maintained horizontally. The cover member 30 faces the vehicle interior side of the windshield 11 via the opening 20 of the housing 23 in a state where the projection device 18 is accommodated in the accommodating portion 19. In addition, in FIG. 1, an example is shown where the cover member 30 is slightly curved.

That is, according to the projection device 18 having the above-described configuration, the image, which is displayed on the liquid crystal panel of the liquid crystal unit 24 to which light is emitted on the rear surface thereof by the backlight unit 26, is projected from the projector 32, is transmitted through the transparent cover member 30 via the plane mirror 27 and the concave mirror 28, and then is reflected on the display portion 16 and reaches a viewpoint region (eyellipse Ey described later) of the driver as a display image having a substantially rectangular shape.

The outer circumference of the above-described windshield 11 is fixed to the periphery of a front opening portion (not shown) of a vehicle body by an adhesive. At the vehicle interior side periphery of the windshield 11, a printed layer portion (hereinafter, referred to as a black ceramic portion) 33 is formed to which the printing of a black ceramic that is not glossy, or the like is performed in a predetermined width from the external side to the inner side.

FIG. 2 shows an arrangement of the eyellipse (a predetermined viewpoint region of driver's seat side: JIS D0021) Ey illustrating a position distribution of driver's left and right eyes in an ellipse, and light paths of external light reaching the common upper end T and lower end B of the eyellipse Ey among external light that is reflected on the cover member 30 of the projection device 18 and the display portion 16 and can reach the eyellipse Ey.

As shown in FIG. 2, the external light that can reach the upper end T and the lower end B of the eyellipse Ey is external light that enters the vehicle interior from the vicinity of the lower edge of the windshield 11 and is reflected on the display portion 16. All of the light paths of the external light are blocked by the black ceramic portion 33. Since the external light, which passes between the upper end T and the lower end B of the eyellipse Ey, passes through an inner side light path in relation to the upper and lower outermost side light paths shown in FIG. 2, all of the external light that is reflected on the cover member 30 and reaches the eyellipse Ey is blocked by the black ceramic portion 33.

A range where the external light, which is incident from the windshield 11, and is reflected on the cover member 30 and the display portion 16 and then can reach the eyellipse Ey, passes through the windshield 11 is determined based on the eyellipse Ey, the display portion 16, the arrangement of the cover member 30, and the shape and inclination of the cover member 30. Based on this range, the range of the black ceramic portion 33 (specifically, an upper end position of the black ceramic portion 33) formed in the lower edge of the windshield 11 is determined.
In this manner, street light, the light of the sun, or the like is not reflected to a display image at the display portion 16, and is reflected on the black ceramic portion 33 that is not glossy, such that the display image of the display portion 16 is easily visible. In addition, the upper end position of the black ceramic portion 33 is set at a height so as not to block the range of vision of the driver.

Therefore, according to the above-described embodiment, it is not necessary to form the light blocking portion that blocks external light in the housing 23 of the projection device 18, like the conventional art, such that it is possible to reduce the cost, and it is possible to improve an appearance thereof.
In addition, the dimension of the housing 23 in a vertical direction of the vehicle can be made smaller than when the light blocking portion is formed in the housing 23 like the conventional art, such that the dimension of the projection device 18 in a vertical direction of the vehicle may be small. Accordingly, it is possible to improve the layout inside the instrument panel 17.
In addition, the black ceramic portion 33 of the windshield 11 is effectively used without forming the light blocking portion in the housing 23, such that it is possible to form the light blocking portion that blocks the external light without increasing the manufacturing processes.

In addition, according to the above-described embodiment, the head-up display device 10 that is described as an example is of a type that reflects an image displayed on the TFT liquid crystal panel to the display portion 16 of the windshield 11. In addition, the device in which the upper opening portion 22 of the housing 23 is blocked out by the cover member 30 may be applied to for example, a head-up display device in which a combiner is adhered to the windshield 11, or a head-up display device where a fluorescent substance is supported by the windshield 11 and is irradiated with ultraviolet light, and therefore the fluorescent substance is excited and emits light, and thereby an image is displayed.

In addition, in the above-described embodiment, the cover member 30 is described as having a flat plate shape or a shape having a substantially arc-like cross-section as an example, but the shape of the cover member 30 is not limited thereto. For example, the shape may be a shape along various quadratic curves (parabola, ellipse, hyperbolic curve, or the like), or a combination thereof.
In addition, according to the present embodiment, a case is described in which the external light is blocked by the black ceramic portion 33 formed at the lower edge of the windshield 11, but it is not limited to the black ceramic as long as the external light can be blocked.

### Industrial Applicability

According to the head-up display device of the present invention, it is possible to prevent a glare on a display plane caused by external light, the cost can be reduced, and a layout property inside the instrument panel can be improved.

### Description of Reference Numerals and Signs

- 11:: WINDSHIELD
- 17:: INSTRUMENT PANEL
- 16:: DISPLAY PORTION
- 30:: COVER MEMBER
- 32:: PROJECTOR
- 33:: BLACK CERAMIC PORTION
- Ey:: EYELLIPSE (VIEWPOINT REGION)

## Claims

1. A head-up display device, comprising:
a projector that projects an image to be displayed on a windshield of a vehicle;
a housing that accommodates the projector and has an opening portion on a pathway of a projection light that is projected from the projector;
a transmissive member that blocks the opening portion and transmits the projection light; and
a light blocking portion that blocks a light path along which light incident from an outside of the vehicle is reflected on the transmissive member and the windshield and reaches a predetermined viewpoint region on a driver's seat side,
wherein the light blocking portion is formed by a printed layer provided in a periphery of the windshield.

2. The head-up display device according to claim 1,
wherein the printed layer is formed by a ceramic print that has a color for blocking the incident light.
